# EUROPÄISCHE PATENTSCHRIFT

(11) **EP 0 946 377 B1**
(45) Veröffentlichungstag und Bekanntmachung des Hinweises auf die Patenterteilung: **25.06.2003**
(21) Anmeldenummer: 97954454.1
(22) Anmeldetag: 22.12.1997
(51) Int. Cl.: B60R 16/00

(54) **VERFAHREN UND VORRICHTUNG ZUR FAHRZEUGSTEUERUNG BZW. -REGELUNG**
METHOD AND DEVICE FOR STEERING OR CONTROLLING A VEHICLE
PROCEDE ET DISPOSITIF DE COMMANDE OU DE REGULATION DE VEHICULE

(30) Priorität: 30.12.1996 DE 19654769
(43) Veröffentlichungstag der Anmeldung: 06.10.1999
(60) Teilanmeldung: 02020597.7
(73) Patentinhaber: Continental Teves AG & Co. oHG, 60488 Frankfurt (DE)
(72) Erfinder: ECKERT, Alfred, D-55129 Mainz-Hechtsheim (DE); GRÄBER, Johannes, D-32429 Minden (DE); DRUMM, Stefan, D-55291 Saulheim (DE); BERTHOLD, Thomas, D-64293 Darmstadt (DE); DIEBOLD, Jürgen, D-65760 Eschborn (DE)
(74) Vertreter: Dusil, Vladimir, Dipl.-Ing.
(86) Internationale Anmeldenummer: EP9707238
(87) Internationale Veröffentlichungsnummer: WO98029279

(56) Entgegenhaltungen:
- EP-A- 0 226 803
- EP-A- 0 429 646
- EP-A- 0 441 961
- EP-A- 0 484 995
- EP-A- 0 548 881
- EP-A- 0 612 641
- EP-A- 0 661 188
- EP-A- 0 703 131
- EP-A- 0 720 928
- EP-A- 0 729 860
- DE-A- 4 129 580
- DE-A- 4 240 557
- DE-A- 4 340 921
- DE-A- 4 409 909
- DE-A- 19 509 492
- DE-C- 4 443 219
- FR-A- 2 732 651
- GB-A- 2 002 617
- US-A- 4 316 173
- US-A- 4 468 740
- US-A- 4 495 913
- US-A- 4 706 195
- US-A- 4 713 665
- US-A- 4 833 612
- US-A- 4 844 557
- US-A- 5 029 090
- US-A- 5 048 631
- US-A- 5 166 881
- US-A- 5 189 619
- US-A- 5 197 562
- US-A- 5 328 006
- US-A- 5 375 060
- US-A- 5 394 954
- US-A- 5 400 864
- US-A- 5 431 241
- US-A- 5 450 324
- US-A- 5 479 349
- US-A- 5 573 315

## Beschreibung

Die vorliegende Anmeldung betrifft ein Verfahren und eine Vorrichtung zum Steuern bzw. Regeln eines Kraftfahrzeugs, mittels dem/der Fahrzeugsteuersignale für den Vortrieb und für die Verzögerung des Kraftfahrzeugs erzeugbar sind.

Die vorliegende Erfindung betrifft insbesondere ein Verfahren und eine Vorrichtung zum Einstellen einer vorgegebenen Sollbeschleunigung eines Fahrzeugs. Im mathematischen Sinne umfaßt dabei der Begriff "Beschleunigung" auch negative Werte, also Fahrzustände, die in der Alltagssprache als Abbremsen bezeichnet werden.

Eine vorgegebene Sollbeschleunigung kann dabei beispielsweise direkt durch den Fahrer oder indirekt durch ein ICC-System (Intelligent Cruise Control) vorgegeben sein. In ICC-Systemen werden Sollbeschleunigungen beispielsweise nach Maßgabe nicht nur des Fahrerwunsches, sondern auch nach Maßgabe etwa einer Fahrzeugfolgeregelung (Abstandsregelung zum vorausfahrenden Fahrzeug), einer Regelung zur Vermeidung gefährlicher Verkehrssituationen usw. ermittelt. Hierzu werden Fahrzeugzustandsgrößen durch Fahrzeugsensoren (etwa Gaspedal, Bremspedal, Drosselklappensensor, Saugluftmenge, Motordrehzahl, Getriebeübersetzung) ermittelt. Außerdem werden gegebenenfalls externe Zustandsgrößen wie Abstand zum vorausfahrenden Fahrzeug, Beschaffenheit der Fahrbahn sowie allgemein der Umgebung, unbewegliche Hindernisse durch geeignete Sensoren und Auswerteeinrichtungen erfaßt. Nach Maßgabe der internen sowie der externen Größen ermittelt ein ICC-System eine Sollängsbeschleunigung, die für das Fahrzeug eingestellt werden soll.

Bekannte Verfahren für die Beschleunigungsregelung umfassen im Zuge von PI- bzw. PID-Regelungen eine Differenzierung der gemessenen Fahrzeuggeschwindigkeit, um die Ist-Beschleunigung zu ermitteln. Diese Differenzierung bringt die üblichen Schwierigkeiten wie starkes Rauschen oder großen Phasenversatz bei der Filterung mit sich. Da bei Differenzierung und Filterung des Geschwindigkeitssignals Stabilitätsreserven eingehalten werden müssen, ist die einstellbare Regelkreisdynamik vergleichsweise gering. Außerdem sind die Regelparameter abhängig von Masse, Geschwindigkeit, Motorkennfeld usw., und die Parameterermittlung erfolgt vergleichsweise komplex.

Aus der US 5 166 881 ist eine Vorrichtung für die Regelung des Abstands zu einem vorausfahrenden Fahrzeug bekannt, bei der Signale für die Fahrzeugverzögerung und den Vortrieb des Fahrzeugs erzeugt werden, die aus einem Antriebsmoment ermittelt werden, das über ein mathematisches Fahrzeugmodell bestimmt wird.

In der US 4 804 074 ist eine Anfahrregelung beschrieben, um ein Fahrzeug am Berg ohne Rückfahrt festzuhalten, in dem die Fahrzeugkupplung so geregelt wird, damit diese nur einen Differenzbetrag zwischen bremsenden Momenten und negativen Momenten überträgt.

Aufgabe der Erfindung ist es, ein Verfahren und eine Vorrichtung zur Beschleunigungsregelung anzugeben, mit denen die Beschleunigungsregelung zuverlässiger, robuster und schneller erfolgen kann.

Diese Aufgabe wird gemäß den Merkmalen der unabhängigen Ansprüche 1 und 14 gelöst. Abhängige Ansprüche sind auf bevorzugte Ausführungsformen der Erfindung gerichtet.

Nachfolgend werden einzelne Ausführungsformen der Erfindung bezugnehmend auf die beiliegenden Zeichnungen beschrieben, es zeigen:
- Fig. 1: eine erste Ausführungsform der Erfindung,
- Fig. 2: eine zweite Ausführungsform der Erfindung,
- Fig. 3: einen möglichen Aufbau des Beobachters aus Fig. 1 und 2,
- Fig. 4: eine Ausführungsform des Beschleunigungsreglers, wobei der Beobachter der Übersichtlichkeit wegen weggelassen wurde,
- Fig. 5: eine Ausführungsform des Bremsmomentreglers,
- Fig. 6: eine Ausführungsform des Motormomentreglers, und
- Fig. 7: eine weitere Ausführungsform des Motormomentreglers.

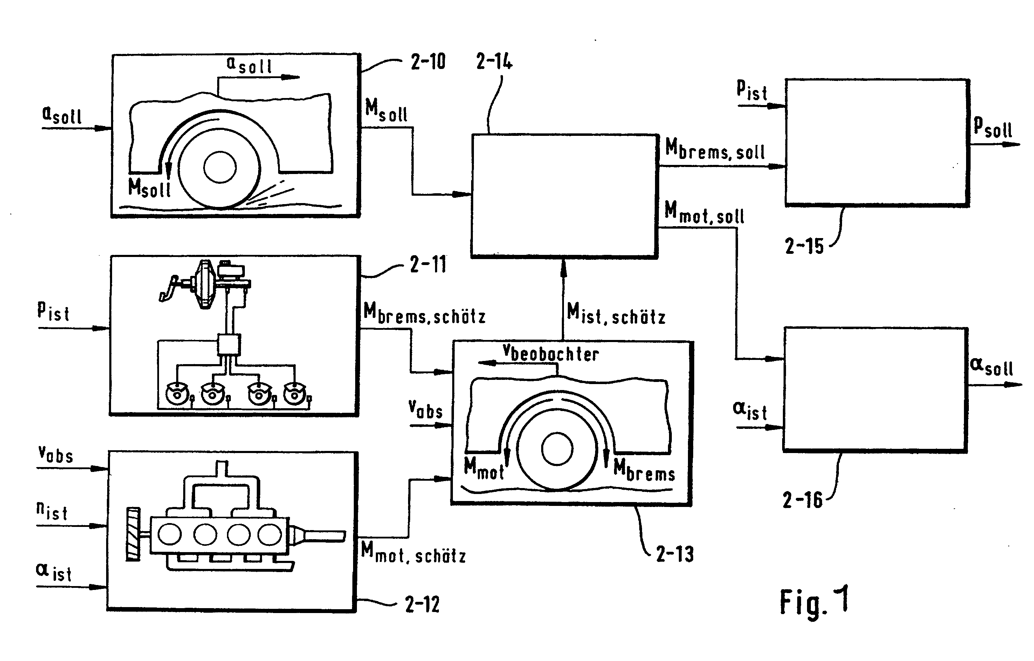

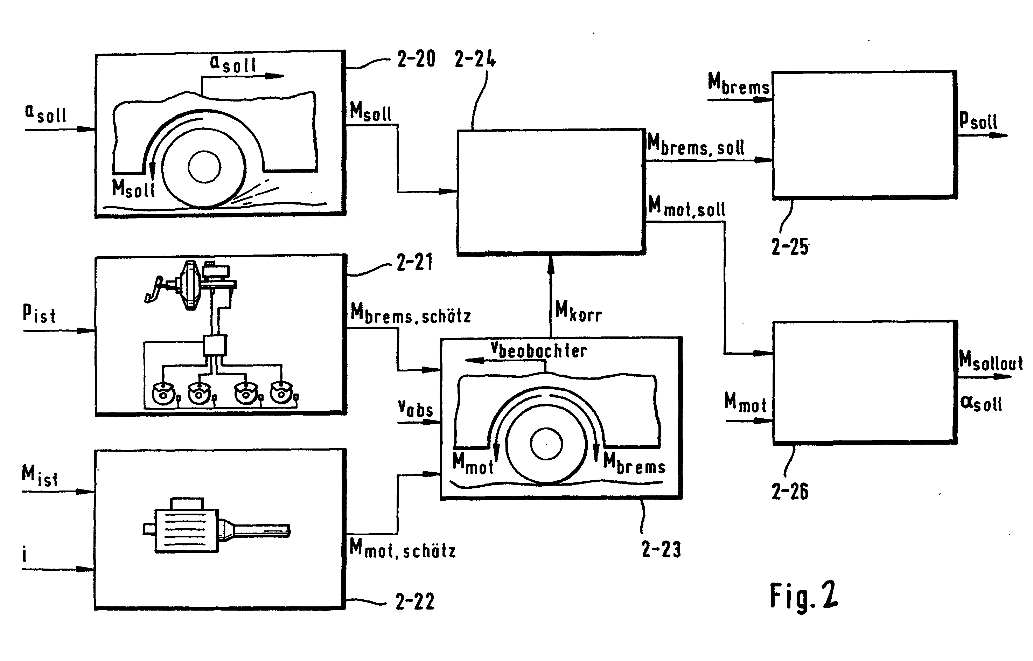

Es wird nun bezugnehmend auf Fig. 1 und Fig. 2 das allgemeine Konzept sowie eine erste Ausführungsform der Erfindung beschrieben.

Vorgeschlagen wird ein modellbasierender Regelungsansatz. Anhand von Modellen werden aus von Sensoren gemessenen Eingangsgrößen Schätzwerte für das Bremsmoment M_{brems,schätz} und das Motormoment M_{mot,schätz} bestimmt. Diese Schätzwerte basieren damit auf tatsächlich gemessenen Fahrzeuggrößen. Andererseits wird ein Sollantriebsmoment Mₛₒₗₗ ermittelt, das zur Erreichung der gewünschten Sollbeschleunigung aₛₒₗₗ notwendig ist. Das Sollantriebsmoment Mₛₒₗₗ widerspiegelt damit die Führungsgröße aₛₒₗₗ der erfindungsgemäßen Regelung.

In Fig. 1 bezeichnet Ziffer 2-10 eine Einrichtung zur Umwandlung der Sollbeschleunigung aₛₒₗₗ in ein Sollantriebsmoment Mₛₒₗₗ. Die Einrichtung kann als Vorfilter angesehen werden. Im einfachsten Fall kann die Umwandlung von Sollbeschleunigung in Sollmoment eine statische Umrechnung sein. Es können aber auch dynamische Anteile berücksichtigt werden, beispielsweise durch dynamische Kompensation von Systemeinschwingzeiten. Die Einrichtung 2-10 gibt das Sollantriebsmoment Mₛₒₗₗ aus.

Ziffer 2-11 bezeichnet eine Einrichtung zur Modellierung einer Fahrzeugbremse, oder einfacher ausgedrückt ein Bremsenmodell. Als Eingangsgröße empfängt das Bremsenmodell 2-11 den gemessenen Hauptzylinderdruck und schätzt daraus das insgesamt wirkende Bremsmoment. In das Modell können aber auch die Wirkung einer Antiblockier- (ABS-), einer Antriebsschlupf- (ASR-) oder einer Automatischen Stabilitätsmangement-System- (ASMS-) Anlage eingearbeitet werden. Statt einer Bremsdruckmessung kann aber auch aus Steuersignalen zur aktiven Bremsdruckerzeugung (beispielsweise bei einem aktiven Booster) ein geschätzter Bremsdruck hergeleitet werden.

Bezugsziffer 2-12 bezeichnet eine Einrichtung zum Modellieren von Motor/Getriebe. Dieses Modell liefert als Ausgangsgröße das geschätzte Motormoment M_{mot,schätz}. Als Eingangsgrößen empfängt es die Fahrzeuggeschwindigkeit v_{abs}, die Motordrehzahl nᵢₛₜ und den Drosselklappenwinkel αᵢₛₜ. Nach Maßgabe dieser Eingangsgrößen schätzt die Einrichtung 2-12 das sich am Rad ergebende Antriebsmoment. Das Modell kann die teilweise oder vollständige Übernahme des Motorkennfelds aufweisen.

In modernen Motorregelungssystemen liegt oft auch das vom Motor abgegebene Drehmoment als Wert vor. In diesem Fall genügt ein Getriebemodell zur Schätzung des Motormoments.

Diese Variante ist in Fig. 2 zu sehen. Das Motor/Getriebe-Modell 2-12 aus Fig. 1 ist durch ein Getriebe-Modell 2-22 ersetzt, das als Eingangsgrößen die Getriebeübersetzung i sowie das durch die Motorregelung vorgegebene Motordrehmoment Mᵢₛₜ empfängt. Nach Maßgabe dieser Eingangsgrößen wird abermals das Antriebsmoment am Rad M_{mot,schätz} ermittelt. Wenn das Übersetzungsverhältnis eines Getriebes im Regelungssystem bekannt ist, kann in einfacher Weise das Moment am Rad berechnet werden.

Der in Fig. 1 wie in Fig. 2 gezeigte Beobachter ist eine Einrichtung 2-13 bzw. 2-23, mit der das Verhalten des Fahrzeugs modelliert wird. Eingangsgrößen sind das anhand des Bremsenmodells ermittelte Bremsmoment M_{brems,schätz}, das anhand des Motor/Getriebe-Modells ermittelte Antriebsmoment am Rad M_{mot,schätz} sowie die Fahrzeuggeschwindigkeit V_{abs}. Der Beobachter kann typenspezifisch ausgebildet sein. Er kennt dann Fahrzeugparameter wie Fahrzeugmasse, Radradius, Fahrzeugzeitkonstanten usw. In Fig. 1 ist der Fall dargestellt, daß das vom Beobachter ausgegebene Signal das am Fahrzeug wirkende Moment ist.

Denkbar ist aber auch, daß mit der Ausgangsgröße des Beobachters nur das Sollfahrzeugmoment verändert wird. In Fig. 1 wird anhand der Schätzwerte für Bremsmoment M_{brems, schätz} und Motormoment M_{mot, schätz} sowie bezugnehmend auf die Fahrzeuggeschwindigkeit V_{abs} ein Korrekturmoment Mₖₒᵣᵣ ermittelt. Mit diesem Korrekturmoment Mₖₒᵣᵣ wird das Sollmoment Mₛₒₗₗ korrigiert. Nach Mäßgabe des Ergebnisses der vorgenommenen Korrektur werden Motor und/oder Bremsen des Fahrzeugs durch geeignete Stellglieder angesteuert.

Durch diese Ausgestaltung der Beschleunigungsregelung wird die zur Erreichung des Sollwerts notwendige Korrektur anhand der Fahrzeuggeschwindigkeit V_{abs} selbst bestimmt, nicht aber anhand ihres differenzierten Werts. Damit können die weiter oben beschriebenen gravierenden Nachteile bekannter Beschleunigungsregelungen vermieden werden. Als Ausgangsgröße liefert die Einrichtung 2-23 das Korrekturmoment Mₖₒᵣᵣ, mit dem das aus der Sollbeschleunigung aₛₒₗₗ ermittelte Soll-drehmoment Mₛₒₗₗ korrigiert wird. In der Einrichtung 2-23 wird zunächst anhand der Schätzwerte für Motormoment (Antriebsmoment am Rad) Mₘₒₜ und Bremsmoment M_{brems} die Fahrzeuggeschwindigkeit v_{schätz} geschätzt. Dieser Schätzwert wird mit der gemessenen Fahrzeuggeschwindigkeit v_{abs} verglichen. Nach Maßgabe der Abweichung zwischen gemessener Geschwindigkeit v_{abs} und geschätzter Geschwindigkeit v_{schätz} wird das Korrekturmoment Mₖₒᵣᵣ ermittelt und von der Einrichtung 2-23 ausgegeben.

Die Momentenreglereinrichtung 2-14 bzw. 2-24 empfängt als Eingangsgrößen das Sollmoment Mₛₒₗₗ vom Vorfilter 2-10 sowie das Korrekturmoment Mₖₒᵣᵣ bzw. das Istmoment M_{ist,schätz} vom Beobachter 2-13. Anhand dieser beiden Eingabewerte werden Steuersignale für Aktoren ermittelt. Diese können umfassen:
- Steuersignale für die Drosselklappe, um den Drosselklappenöffnungsgrad zu vergrößern oder zu verkleinern,
- Steuersignale für die Bremse, um den Bremsdruck zu erhöhen oder zu verringern, und
- gegebenenfalls auch Steuersignale für das Getriebe, um die Getriebestufe gegebenenfalls anzupassen.

Nach Fig. 2 werden das Sollmoment Mₛₒₗₗ und das Korrekturmoment Mₖₒᵣᵣ am einfachsten in der Weise verarbeitet, daß sie addiert werden, wobei dann nach Maßgabe des Vorzeichens geeignete Maßnahmen, beispielsweise entweder Anpassen des Kraftstoffzufuhrsignals oder des Bremsdruckes ergriffen werden. Momentensollwert und Momentenkorrekturwert können aber auch so verarbeitet werden, daß ein gewichtetes Mittel gebildet wird.

Wie in Fig. 1 dargestellt, kann auch aufgrund des Ausgangssignals vom Beobachter 2-13 und vom Vorfilter 2-10 ein Regelungssignal im Sinne einer Regelung erzeugt werden. Das Regelungssignal wird einem Koordinator zugeführt, der das Regelungssignal z. B. in Abhängigkeit von seinem Vorzeichen in ein drittes und viertes Signal umwnadelt, die jeweils zum Erzeugen einer Verzögerungs- bzw. Vortriebsstellgröße herangezogen werden.

Ziffer 2-25 in Fig. 2 zeigt einen Bremsmomentenregler. Er erhält sein Eingangssignal M_{brems,soll} vom Koordinator 2-24. Er verarbeitet ebenfalls das geschätzte Bremsmoment M_{brems}. Anhand dieser beiden Werte ist eine Bremskraftregelung möglich. Den Reglerausgang bildet sein Signal pₛₒₗₗ, mit dem eine geeignete regelbare Druckquelle angesteuert werden kann. Da die Bremsenhydraulik vergleichsweise genau bekannt ist, kann außerdem ein Feed-forward-Anteil entsprechend dem inversen Bremsenmodell eingearbeitet werden.

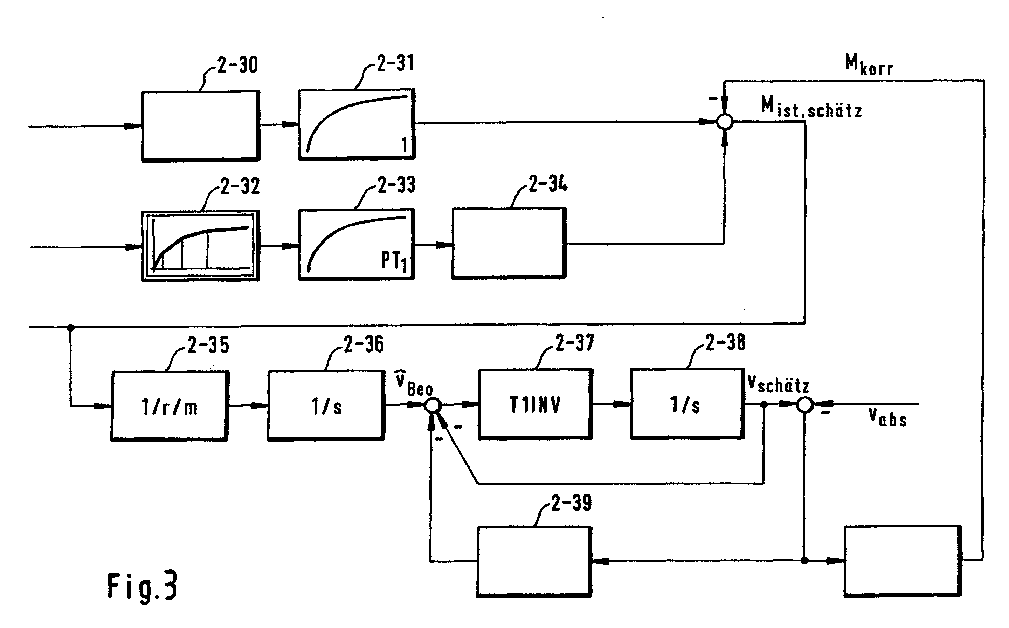

Fig. 3 zeigt in Kombination Ausführungsformen des Bremsenmodells 2-11 bzw. 2-21, des Motormodells 2-12 bzw. Getriebemodells 2-22 sowie den internen Aufbau des Beobachters 2-13 bzw. 2-23.

Das Bremsenmodell 2-11 bzw. 2-21 ist durch eine Verstärkungseinrichtung 2-30 und einen Tiefpaß 2-31 modelliert.

Das Motormodell 2-12 besteht aus einer Verstärkungseinrichtung 2-32, die in Fig. 3 als Annäherung eines Motorkennfelds nichtlinear ausgebildet ist, einem Tiefpaß 2-33, der als PT₁-Glied ausgebildet sein kann, und einer Einrichtung 2-34 zur Nachbildung der Getriebeübersetzung.

Der Beobachter selbst besteht aus einer Einrichtung 2-35, die in der dargestellten Ausführungsform den Radradius r und die Fahrzeugmasse m proportional nachbildet (2-35), sowie aus einem Integrierglied 2-36. Diesem nachgeschaltet ist eine über eine Rückführung nachgebildete Sensorsignalverzögerung bzw. der Kraftaufbau am Reifen (2-37 und 2-38, hier Tiefpaß erster Ordnung). Es ergibt sich die vom Beobachter geschätzte Geschwindigkeit v_{schätz}. Diese wird mit der ermittelten Fahrzeuggeschwindigkeit v_{abs} verglichen. Nach Maßgabe dieses Vergleichs wird das Korrekturmoment Mₖₒᵣᵣ bzw. das am Fahrzeug wirkende Moment M_{ist,schätz} ermittelt und ausgegeben.

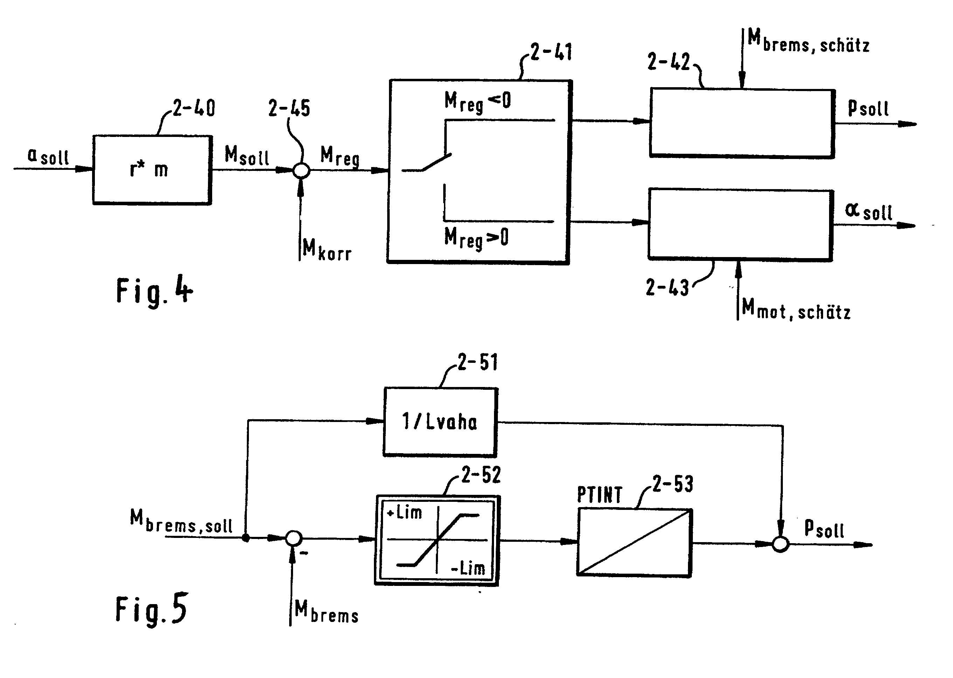

Fig. 4 zeigt in Kombination Ausführungsformen des Vorfilters 2-20 und des Koordinators 2-24 nach Fig. 2. Mit der Einrichtung 2-40 - dem Vorfilter-, die die Sollbeschleunigung aₛₒₗₗ empfängt, wird die Fahrzeugmasse m sowie der Radhalbmesser nachgebildet. Die Einrichtung 2-40 liefert das Sollmoment Mₛₒₗₗ. In der gezeigten Ausführungsform wird es im Koordinator 2-24 zum Korrekturmoment Mₖₒᵣᵣ (das auch negativ sein kann) addiert (2-45), so daß sich ein Regelmoment M_{reg} ergibt. In der Entscheidungseinrichtung 2-41 wird entschieden, ob das Regelmoment M_{reg} positiv oder negativ ist. Ist es positiv (M_{reg} > 0, unterer Zweig), wird der Motormomentenre'gler 2-43 angesteuert, ist das Regelmoment negativ (M_{reg} kleiner Null, oberer Zweig), wird die Bremsmomentregelung 2-42 angesprochen.

Fig. 5 zeigt eine Ausführungsform des Bremsmomentreglers. Ausgangssignal ist ein Solldruck pₛₒₗₗ für ein Bremskraftstellglied. Als Eingangssignal empfängt der Bremsmomentregler ein Soll-Bremsmoment M_{brems,soll}, das zum einen mit dem aus dem Bremsenmodell stammenden geschätzten Bremsmoment M_{brems,schätz} verglichen und danach gradientenbegrenzt wird (2-52). Parallel zum Vergleich zwischen Soll- und Schätzbremsmoment wird ein Feed-forward-Anteil 2-51 geführt, mit dem das vergleichsweise genau bekannte Verhalten des Bremssystems von vornherein kompensiert wird. Der I-Anteil im Signal pₛₒₗₗ wird zu Null gesetzt, wenn die Drosselklappe noch nicht ganz geschlossen ist, um eine bleibende Regelabweichung im Bremsmoment zu erzwingen. Damit kann man erreichen, daß der Motormomentregler die Drosselklappe bei einsetzendem Bremseingriff ganz schließt und so einen Zustand verhindert, in dem Bremse und Motor gegeneinander arbeiten.

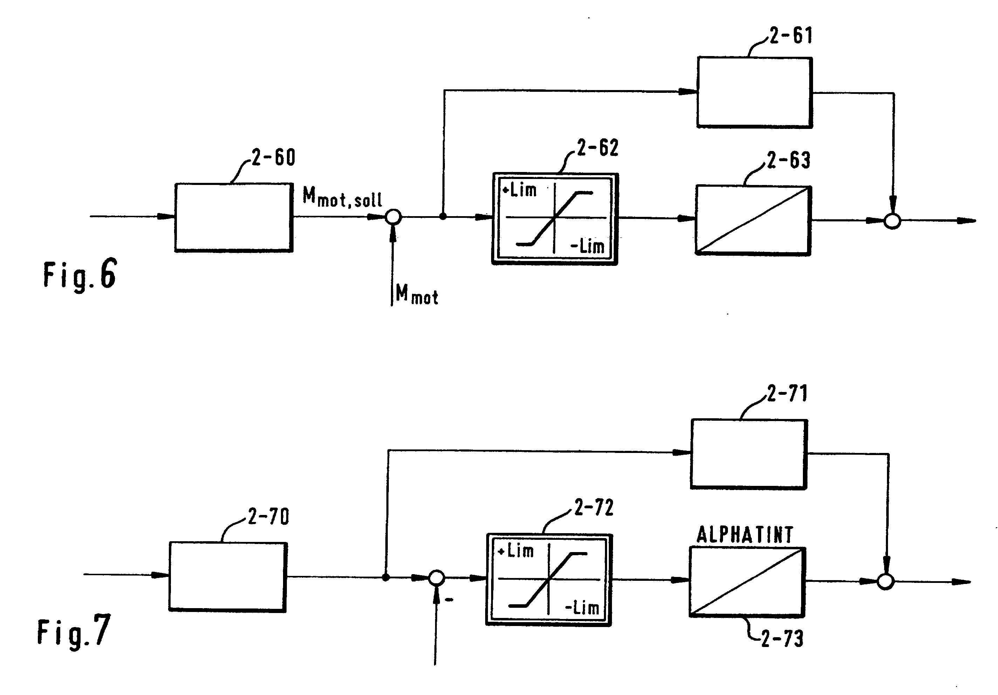

Fig. 6 zeigt einen Motormomentregler (entsprechend 2-26 in Fig. 2). Vom Koordinator 2-24 in Fig. 3 bzw. 2-41 in Fig. 4 wird ein Motorsollmoment M_{mot,soll} ausgegeben, von dem das vom Motormodell 2-12 ermittelte geschätzte Motormoment M_{mot,schätz} subtrahiert wird. Das Ergebnis durchläuft einen in seinem Gradienten beschränkten PI-Regler 2-62 und 2-63. Auch hier kann ein Feed-forward-Anteil 2-61 vorgesehen sein, mit dem die Regelungsgeschwindigkeit erhöht werden kann.

Fig. 7 zeigt eine Variante des Motormomentreglers. Sie ist geeignet für eine hochentwickelte Motorelektronik, bei der das aktuelle Motormoment bekannt ist. Dieser Ist-Wert wird dann für die Regelung benutzt. Ausgangswert ist der Motormomentensollwert für die Motorelektronik.

Die in den Fig. 1 bis 7 dargestellten Einzelkomponenten können durch entsprechende Schaltungen und Kennfelder realisiert sein. Vorzugsweise werden die einzelnen Komponenten durch entsprechend programmierte Rechner als zeitdiskrete digitale Systeme implementiert, die bei einer geeigneten Abtastfrequenz der einzelnen Werte arbeiten.

## Patentansprüche

1. Verfahren zum Steuern bzw. Regeln eines Kraftfahrzeugs, mittels dem Fahrzeugsteuersignale für den Vortrieb und für die Verzögerung des Kraftfahrzeugs erzeugbar sind, **gekennzeichnet durch**
- Erfassen eines den Bremsdruck charakterisierenden Signals,
- Ausgeben eines einem Moment entsprechenden ersten Signals (Mₖₒᵣᵣ, M_{ist,schätz}) in Abhängigkeit von einem Bremsmoment (M_{brems}) und/oder von einem Antriebsmoment (Mₘₒₜ) und der Absolutgeschwindigkeit v_{abs} **durch** einen Beobachter,
- Verarbeiten des ersten Signals sowie eines dem Soll-Fahrzeugmoment Mₛₒₗₗ entsprechenden zweiten Signals zu einem einem Verzögerungsausgangsmoment entsprechenden dritten Signal und einem einem Antriebsausgangsmoment entsprechenden vierten Signal,
- Umwandeln des dritten Signals und vierten Signals in Fahrzeugsteuersignale für den Vortrieb und für die Verzögerung.

2. Verfahren nach Anspruch 1, **dadurch gekennzeichnet, daß** das Fahrzeugsteuersignal für den Vortrieb ein Kraftstoffzufuhrsignal ist.

3. Verfahren nach Anspruch 1, **dadurch gekennzeichnet, daß** das Fahrzeugsteuersignal für den Vortrieb ein Motorsollmoment ist.

4. Verfahren nach einem der Ansprüche 1 bis 3, **dadurch gekennzeichnet, daß** das Fahrzeugsteuersignal für die Verzögerung ein Bremssolldruck ist.

5. Verfahren nach einem der Ansprüche 1 bis 3, **dadurch gekennzeichnet, daß** das Fahrzeugsteuersignal für die Verzögerung ein einer Bremskraft entsprechendes elektrisches brake-by-wire-Signal ist.

6. Verfahren nach einem der Ansprüche 1 bis 5, **dadurch gekennzeichnet, daß** das erste Signal einem Korrektursignal für das zweite Signal entspricht.

7. Verfahren nach einem der Ansprüche 1 bis 5, **dadurch gekennzeichnet, daß** das erste Signal einem am Fahrzeug wirkenden Moment entspricht.

8. Verfahren nach einem der Ansprüche 1 bis 7, **dadurch gekennzeichnet, daß** das Antriebsmoment Mₘₒₜ anhand eines Motor/Getriebe-Modells ermittelt wird, das als Eingangsgrößen die Fahrzeuggeschwindigkeit v_{abs,} die Motordrehzahl nᵢₛₜ, die Drosselklappenöffnung αᵢₛₜ sowie die Getriebeübersetzung i empfängt.

9. Verfahren nach einem der Ansprüche 1 bis 7, **dadurch gekennzeichnet, daß** das Sollantriebsmoment Mₘₒₜ durch ein Getriebemodell ermittelt wird, das als Eingangsgrößen das Motorsollmoment aus einer elektronischen Motorsteuerung sowie die Getriebeübersetzung i empfängt.

10. Verfahren nach einem der Ansprüche 1 bis 9, **dadurch gekennzeichnet, daß** das Sollbremsmoment M_{brems} anhand eines Bremsenmodells ermittelt wird, das als Eingangsgröße den Druck pᵢₛₜ zur Betätigung der Bremse empfängt.

11. Verfahren nach einem der Ansprüche 1 bis 10, **dadurch gekennzeichnet, daß** das Soll-Fahrzeugmoment Mₛₒₗₗ durch Vorfilterung und nach Maßgabe von Fahrzeugmasse und Radhalbmesser aus der Soll-Fahrzeugbeschleunigung aₛₒₗₗ ermittelt wird.

12. Verfahren nach Anspruch 11, bei dem aus Sollbremsmoment M_{brems} und aus Antriebsmoment Mₘₒₜ nach Maßgabe von Radradius und Fahrzeugmasse die Schätzgeschwindigkeit v_{schätz} des Fahrzeugs ermittelt wird.

13. Verfahren nach einem der Ansprüche 1 bis 12, mit den Schritten:
- Erfassen einer Absolutgeschwindigkeit v_{abs} des Kraftfahrzeugs sowie weiterer Fahrzeugzustandsgrößen,
**gekennzeichnet durch** die Schritte:
- gleichzeitiges Ermitteln mehrerer Beschleunigungszwischenwerte für das Fahrzeug aus den ermittelten Fahrzeugzustandsgrößen,
- Ermitteln einer Sollängsbeschleunigung a_{Lsoll} nach Maßgabe der ermittelten Beschleunigungszwischenwerte, und
- Regeln der Fahrzeugaktoren nach Maßgabe der ermittelten Sollängsbeschleunigung.

14. Vorrichtung zum Steuern bzw. Regeln eines Kraftfahrzeugs, mittels dem Fahrzeugsteuersignale für den Vortrieb und für die Verzögerung des Kraftfahrzeugs erzeugbar sind, zur Einstellung einer vorgegebenen Sollängsbeschleunigung aₛₒₗₗ, **gekennzeichnet durch**
- eine Erfassungseinrichtung zum Erfassen eines den Bremsdruck charakterisierenden Signals,
- eine Ausgabeeinrichtung (2-13, 2-23) zum Ausgeben eines ersten Signals (Mₖₒᵣᵣ, M_{ist,schätz}),
- eine Rechnereinrichtung (2-14, 2-24) zum Erzeugen eines einem Verzögerungsausgangsmoment entsprechenden dritten Signals und eines einem Antriebsausgangsmoment entsprechenden vierten Signals aus dem ersten Signal sowie aus einem dem Soll-Fahrzeugmoment Mₛₒₗₗ entsprechenden zweiten Signal und
- eine Wandlereinrichtung (2-15, 2-16, 2-25, 2-26) zum Erzeugen eines Fahrzeugsteuersignals für den Vortrieb bzw. die Verzögerung aus dem dritten und vierten Signal.

15. Vorrichtung nach Anspruch 14, **gekennzeichnet durch** eine Einrichtung (2-16) zum Ausgeben eines Fahrzeugsteuersignals für den Vortrieb als Kraftstoffzufuhrsignal.

16. Vorrichtung nach Anspruch 14, **gekennzeichnet durch** eine Einrichtung (2-26) zum Ausgeben eines Fahrzeugsteuersignals für den Vortrieb als Motorsollmoment.

17. Vorrichtung nach einem der Ansprüche 14 bis 16, **gekennzeichnet durch** eine Einrichtung (2-15, 2-25) zum Ausgeben eines Fahrzeugsteuersignals für die Verzögerung als Bremssolldrucksignal.

18. Vorrichtung nach einem der Ansprüche 14 bis 16, **gekennzeichnet durch** eine Einrichtung (2-15, 2-25) zum Ausgeben eines Fahrzeugsteuersignals für die Verzögerung als elektrisches brake-by-wire-Signal.

19. Vorrichtung nach einem der Ansprüche 14 bis 18, **gekennzeichnet durch** eine Einrichtung (2-23) zum Ausgeben eines Korrektursignals für die Korrektur des zweiten Signals in der Rechnereinrichtung (2-24).

20. Vorrichtung nach einem der Ansprüche 14 bis 18, **gekennzeichnet durch** eine Einrichtung (2-13) zum Ausgeben eines Korrektursignals für die Korrektur des zweiten Signals in der Rechnereinrichtung (2-14).

21. Vorrichtung nach einem der Ansprüche 14 bis 18, **gekennzeichnet durch** eine Einrichtung (2-23) zum Ausgeben eines einem Moment entsprechenden Signals als Eingangsgröße (M_{ist,schätz}) für die Einregelung des zweiten Signals in der Rechnereinrichtung (2-14).

22. Vorrichtung nach einem der Ansprüche 14 bis 21, **gekennzeichnet durch** ein Motor/Getriebe-Modell (2-12), das als Eingangsgrößen die Fahrzeuggeschwindigkeit (v_{abs}), die Motordrehzahl (nᵢₛₜ), die Drosselklappenöffnung (αᵢₛₜ) sowie die Getriebeübersetzung (i) empfängt und daraus das Antriebsmoment (Mₘₒₜ) ermittelt.

23. Vorrichtung nach einem der Ansprüche 14 bis 21, **gekennzeichnet durch** ein Getriebemodell (2-22), das als Eingangsgrößen das Motorsollmoment aus einer elektronischen Motorsteuerung sowie die Getriebeübersetzung i empfängt und daraus das Antriebsmoment (Mₘₒₜ) ermittelt.

24. Vorrichtung nach einem der Ansprüche 14 bis 23, **gekennzeichnet durch** ein Bremsenmodell, das als Eingangsgröße den Druck (pᵢₛₜ) zur Betätigung der Bremse empfängt und daraus das Sollbremsmoment (M_{brems}) ermittelt.

25. Vorrichtung nach einem der Ansprüche 14 bis 24, **gekennzeichnet durch** einen Vorfilter (2-10, 2-20, 2-40) der nach Maßgabe von Fahrzeugmasse und Radhalbmesser aus der Sollängsbeschleunigung aₛₒₗₗ das Soll-Fahrzeugmoment Mₛₒₗₗ ermittelt.

26. Vorrichtung nach einem der Ansprüche 14 bis 25, mit
- Einrichtungen (1-16, 1-17a - c) zum Erfassen der Absolutgeschwindigkeit des Kraftfahrzeugs sowie weiterer Fahrzeugszustandsgrößen,
**gekennzeichnet durch**
- Einrichtungen (1-11a - d) zum gleichzeitigen Ermitteln mehrerer Beschleunigungszwischenwerte (a_{Folge}, a_{Temp}, a_{Pedal}),
- eine Koordinatoreinrichtung (1-12) zum Ermitteln einer Gesamtsollängsbeschleunigung a_{Lsoll} aus den Beschleunigungzwischenwerten (a_{Folge}, a_{Temp}, a_{Pedal}) und
- einen Beschleunigungsregler (1-13), der die Fahrzeugaktoren (1-14a - c) nach Maßgabe der Gesamtsolllängsbeschleunigung (a_{Lsoll}) ansteuert.

## Claims

1. Method for controlling or regulating a motor vehicle, by means of which vehicle control signals for the acceleration and the deceleration of the motor vehicle can be produced,
- determining a signal characterizing the brake pressure,
- outputting a first signal (T_{corr}, T_{actual,est}) that corresponds to a torque as a function of a braking torque (T_{brake}) and/or drive torque (T_{engine}) and the absolute speed v_{abs} by a monitor,
- processing the first signal as well as a second signal that corresponds to the nominal motor vehicle torque Tₙₒₘ into a third signal that corresponds to a deceleration output torque and a fourth signal that corresponds to an acceleration output torque, and
- converting the third signal and the fourth signal into vehicle control signals for the acceleration and for the deceleration.

2. Method according to Claim 1,
**characterized by** the fact that the vehicle control signal for the acceleration is a fuel supply signal.

3. Method according to Claim 1,
**characterized by** the fact that the vehicle control signal for the acceleration is a nominal engine torque.

4. Method according to one of Claims 1 to 3,
**characterized by** the fact that the vehicle control signal for the deceleration is a nominal brake pressure.

5. Method according to one of Claims 1 to 3,
**characterized by** the fact that the vehicle control signal for the deceleration is an electric brake-by-wire signal that corresponds to a brake force.

6. Method according to one of Claims 1 to 5,
**characterized by** the fact that the first signal corresponds to a correction signal for the second signal.

7. Method according to one of Claims 1 to 5,
**characterized by** the fact that the first signal corresponds to torque that acts on the motor vehicle.

8. Method according to one of Claims 1 to 7,
**characterized by** the fact that the drive torque T_{engine} is determined with the aid of an engine/transmission model which receives the vehicle speed V_{abs}, the engine speed n_{act}, the throttle opening angle α_{act} as well as the transmission gear ratio i as input variables.

9. Method according to one of Claims 1 to 7,
**characterized by** the fact that the nominal drive torque T_{engine} is determined with the aid of a transmission model that receives the nominal engine torque from an electronic engine control as well as the transmission gear ratio i as input variables.

10. Method according to one of Claims 1 to 9,
**characterized by** the fact that the nominal braking torque T_{brake} is determined with the aid of a brake model that receives they pressure p_{act} for actuating the brake as the input variable.

11. Method according to one of Claims 1 to 10,
**characterized by** the fact that the nominal vehicle torque Tₙₒₘ is determined from the nominal vehicle acceleration aₙₒₘ by means of prefiltering based on the motor vehicle mass and the wheel radius.

12. Method according to Claim 11, wherein the estimated speed vₑₛₜ of the vehicle is determined from the nominal braking torque T_{brake} and the drive torque T_{engine} based on the wheel radius and the vehicle mass.

13. Method according to any one of Claims 1 to 12, including the following steps:
- determining an absolute speed v_{abs} of the motor vehicle and further vehicle condition variables,
**characterized by** the steps:
- simultaneously determining several intermediate acceleration values for the vehicle from the determined vehicle condition variables,
- determining a nominal longitudinal acceleration a_{Lnom} based on the determined intermediate acceleration values, and
- regulating the vehicle actors based on the determined nominal longitudinal acceleration.

14. Device for controlling or regulating a motor vehicle, by means of which vehicle control signals for the acceleration and the deceleration of the motor vehicle can be produced, for adjusting a predetermined nominal longitudinal acceleration aₙₒₘ, **characterized by**
- a device for determining a signal that characterizes the brake pressure,
- an output device (2-13, 2-23) for outputting a first signal (T_{corr}, T_{actual,est}),
- a computation device (2-14, 2-24) for generating a third signal that corresponds to a deceleration output torque and a fourth signal that corresponds to an acceleration output torque from the first signal and from a second signal that corresponds to the nominal motor vehicle torque Tₙₒₘ, and
- a converting device (2-15, 2-16, 2-25, 2-26) for generating a vehicle control signal for the acceleration and the deceleration from the third and fourth signals, respectively.

15. Device according to Claim 14,
**characterized by** a device (2-16) for outputting a vehicle control signal for the acceleration in the form of a fuel supply signal.

16. Device according to Claim 14,
**characterized by** a device (2-26) for outputting a vehicle control signal for the acceleration in the form of a nominal engine torque.

17. Device according to one of Claims 14 to 16,
**characterized by** a device (2-15, 2-25) for outputting a vehicle control signal for the deceleration in the form of a nominal brake pressure signal.

18. Device according to one of Claims 14 to 16,
**characterized by** a device (2-15, 2-25) for outputting a vehicle control signal for the deceleration in the form of an electric brake-by-wire signal.

19. Device according to one of Claims 14 to 18,
**characterized by** a device (2-23) for outputting a correction signal that serves for correcting the second signal in the computation device (2-24).

20. Device according to one of Claims 14 to 18,
**characterized by** a device (2-13) for outputting a correction signal that serves for correcting the second signal in the computation device (2-14).

21. Device according to one of Claims 14 to 18,
**characterized by** a device (2-23) for outputting a signal that corresponds to a torque and serves as the input variable (T_{actual, est}) for adjusting the second signal in the computation device (2-14).

22. Device according to one of Claims 14 to 21,
**characterized by** an engine/transmission model (2-12) that receives the vehicle speed (v_{abs}), the engine speed (n_{act}), the throttle opening angle (α_{act}) and the transmission gear ratio (i) as input variables and that determines the drive torque (T_{engine}) therefrom.

23. Device according to one of Claims 14 to 21,
**characterized by** a transmission model (2-22) that receives the nominal engine torque from an electronic engine control as well as the transmission gear ratio i as input variables and determines the drive torque (T_{engine}) therefrom.

24. Device according to one of Claims 14 to 23,
**characterized by** a brake model that receives the pressure (p_{act}) for actuating the brake as the input variable and determines the braking torque (T_{brake}) thereof.

25. Device according to one of Claims 14 to 24,
**characterized by** a prefilter (2-10, 2-20, 2-40) that determines the nominal vehicle torque Tₙₒₘ from the nominal longitudinal acceleration aₙₒₘ based on the motor vehicle mass and the wheel radius.

26. Device according to one of Claims 14 to 25, including
- devices (1-16, 1-17a - c) for determining the absolute speed of the motor vehicle and further vehicle condition variables,
**characterized by**
- devices (1-11a - d) for simultaneously determining several intermediate acceleration values (a_{sequence}, aₜₑₘₚ, a_{pedal}),
- a coordinator device (1-12) for determining a total nominal longitudinal acceleration a_{Lnom} based on the intermediate acceleration values (a_{sequence}, aₜₑₘₚ, a_{pedal}), and
- an acceleration controller (1-13) driving the vehicle actors (1-14a - c) based on the total nominal longitudinal acceleration (a_{Lnom}).

## Revendications

1. Procédé de commande ou de régulation d'un véhicule automobile, au moyen duquel des signaux de commande de véhicule permettant la propulsion du véhicule automobile et permettant son ralentissement peuvent être produits, **caractérisé en ce que**
- on détecte un signal caractérisant la pression de frein,
- on délivre, au moyen d'un observateur, un premier signal (Mₖₒᵣᵣ, M_{ist,schätz}) correspondant à un couple, en fonction d'un couple de frein (M_{brems}) et/ou d'un couple de traction (Mₘₒₜ) et de la vitesse absolue v abs, délivrance,
- on traite le premier signal et un deuxième signal, correspondant à un couple de véhicule de consigne Mₛₒₗₗ, pour donner un troisième signal correspondant à un couple de sortie de ralentissement et un quatrième signal correspondant à un couple de sortie de traction,
- on transforme le troisième signal et le quatrième signal en signaux de commande de véhicule pour la propulsion et pour le ralentissement.

2. Procédé suivant la revendication 1, **caractérisé en ce que** le signal de commande de véhicule pour la propulsion est un signal d'envoi de carburant.

3. Procédé suivant la revendication 1, **caractérisé en ce que** le signal de commande de véhicule pour la propulsion est un couple de consigne pour le moteur.

4. Procédé suivant l'une des revendications 1 à 3, **caractérisé en ce que** le signal de commande de véhicule pour le ralentissement est une pression de consigne pour le frein.

5. Procédé suivant l'une des revendications 1 à 3, **caractérisé en ce que** le signal de commande de véhicule pour le ralentissement est un signal électrique pour un système de freinage à commande électronique correspondant à une force de freinage.

6. Procédé suivant l'une des revendications 1 à 5, **caractérisé en ce que** le premier signal correspond à un signal de correction pour le deuxième signal.

7. Procédé suivant l'une des revendications 1 à 5, **caractérisé en ce que** le premier signal correspond à un couple agissant sur le véhicule.

8. Procédé suivant l'une des revendications 1 à 7, **caractérisé en ce que** le couple de traction Mₘₒₜ est déterminé à l'aide d'un modèle moteur/boîte de vitesses qui reçoit, comme grandeurs d'entrée, la vitesse de véhicule v_{abs}, la vitesse de rotation de moteur nᵢₛₜ, l'ouverture de papillon des gaz αᵢₛₜ et le rapport de boîte de vitesses i.

9. Procédé suivant l'une des revendications 1 à 7, **caractérisé en ce que** le couple de traction de consigne Mₘₒₜ est déterminé au moyen d'un modèle de boîte de vitesses qui reçoit, comme grandeurs d'entrée, le couple moteur de consigne en provenance d'une commande électronique de moteur et le rapport de boîte de vitesses i.

10. Procédé suivant l'une des revendications 1 à 9, **caractérisé en ce que** le couple de frein de consigne M_{brems} est déterminé à l'aide d'un modèle de frein qui reçoit, comme grandeur d'entrée, la pression pᵢₛₜ servant à actionner le frein.

11. Procédé suivant l'une des revendications 1 à 10, **caractérisé en ce que** le couple de véhicule de consigne Mₛₒₗₗ est déterminé, au moyen d'un filtrage préalable et en tenant compte de la masse de véhicule et du demi-diamètre de roue, à partir de l'accélération de véhicule de consigne aₛₒₗₗ.

12. Procédé suivant la revendication 11, selon lequel la vitesse estimée v_{schätz} du véhicule est déterminée à partir du couple de frein de consigne M_{brems} et à partir du couple de traction Mₘₒₜ en tenant compte du rayon de roue et de la masse de véhicule.

13. Procédé suivant l'une des revendications 1 à 12, comportant comme opérations :
- la détection d'une vitesse absolue v_{abs} du véhicule automobile et d'autres grandeurs d'état de véhicule,
**caractérisé par** les opérations :
- la détermination simultanée de plusieurs valeurs intermédiaires d'accélération pour le véhicule à partir des grandeurs d'état de véhicule déterminées,
- la détermination d'une accélération longitudinale de consigne a_{Lsoll} en tenant compte des valeurs intermédiaires d'accélération déterminées, et
- la régulation des actionneurs de véhicule en tenant compte de l'accélération longitudinale de consigne déterminée.

14. Dispositif de commande ou de régulation d'un véhicule automobile, au moyen duquel des signaux de commande de véhicule pour la propulsion et pour le ralentissement du véhicule automobile peuvent être déterminés, en vue de régler une accélération longitudinale de consigne aₛₒₗₗ préfixée,
**caractérisé par**
- un dispositif de détection servant à détecter un signal caractérisant la pression de frein,
- un dispositif de délivrance (2-13, 2-23) servant à délivrer un premier signal (Mₖₒᵣᵣ, M_{ist,schätz}),
- un dispositif calculateur (2-14, 2-24) servant à produire un troisième signal correspondant à un couple de sortie de ralentissement et un quatrième signal correspondant à un couple de sortie de traction, à partir du premier signal et à partir d'un deuxième signal correspondant au couple de véhicule de consigne Mₛₒₗₗ et
- un dispositif convertisseur (2-15, 2-16, 2-25, 2-26) servant à produire un signal de commande de véhicule pour la propulsion ou le ralentissement à partir du troisième signal et du quatrième signal.

15. Dispositif suivant la revendication 14, **caractérisé par** un dispositif (2-16) servant à délivrer un signal de commande de véhicule pour la propulsion sous forme d'un signal d'envoi de carburant.

16. Dispositif suivant la revendication 14, **caractérisé par** un dispositif (2-26) servant à délivrer un signal de commande de véhicule pour la propulsion sous forme d'un couple de consigne de moteur.

17. Dispositif suivant l'une des revendications 14 à 16, **caractérisé par** un dispositif (2-15, 2-25) servant à délivrer un signal de commande de véhicule pour le ralentissement sous forme d'un signal de pression de consigne de frein.

18. Dispositif suivant l'une des revendications 14 à 16, **caractérisé par** un dispositif (2-15, 2-25) servant à délivrer un signal de commande de véhicule pour le ralentissement sous forme d'un signal électrique pour un système de freinage à commande électronique.

19. Dispositif suivant l'une des revendications 14 à 18, **caractérisé par** un dispositif (2-23) servant à délivrer un signal de correction pour la correction du deuxième signal dans le dispositif calculateur (2-24).

20. Dispositif suivant l'une des revendications 14 à 18, **caractérisé par** un dispositif (2-13) servant à délivrer un signal de correction pour la correction du deuxième signal dans le dispositif calculateur (2-14).

21. Dispositif suivant l'une des revendications 14 à 18, **caractérisé par** un dispositif (2-23) servant à délivrer un signal correspondant à un couple sous forme d'une grandeur d'entrée (M_{ist,schätz}) pour l'ajustement du deuxième signal dans le dispositif calculateur (2-14).

22. Dispositif suivant l'une des revendications 14 à 21 , **caractérisé par** un modèle de moteur/boîte de vitesses (2-12) qui reçoit, comme grandeurs d'entrée, la vitesse de véhicule (v_{abs}), la vitesse de rotation de moteur (nᵢₛₜ), l'ouverture de papillon des gaz (αᵢₛₜ) et le rapport de boîte de vitesses (i) et, à partir de celles-ci, détermine le couple de traction (Mₘₒₜ)

23. Dispositif suivant l'une des revendications 14 à 21, **caractérisé par** un modèle de boîte de vitesses (2-22) qui reçoit, comme grandeur d'entrée, le couple de consigne de moteur provenant d'une commande de moteur électronique et le rapport de boîte de vitesses i et, à partir de celles-ci, détermine le couple de traction (Mₘₒₜ).

24. Dispositif suivant l'une des revendications 14 à 23, **caractérisé par** un modèle de frein qui reçoit, comme grandeur d'entrée, la pression (pᵢₛₜ) servant à actionner le frein et, à partir de celle-ci, détermine le couple de frein de consigne (M_{brems}).

25. Dispositif suivant l'une des revendications 14 à 24, **caractérisé par** un filtre préalable (2-10, 2-20, 2-40) qui détermine le couple de véhicule de consigne Mₛₒₗₗ à partir de l'accélération longitudinale de consigne aₛₒₗₗ en tenant compte de la masse de véhicule et du demi-diamètre de roue.

26. Dispositif suivant l'une des revendications 14 à 25, comprenant
- des dispositifs (1-16, 1-17a - c) servant à détecter la vitesse absolue du véhicule automobile et d'autres grandeurs d'état de véhicule,
**caractérisé par**
- des dispositifs (1-11a - d) servant à déterminer simultanément plusieurs valeurs intermédiaires d'accélération (a_{Folge}, a_{Temp}, a_{Pedal}),
- un dispositif coordinateur (1-12) servant à déterminer une accélération longitudinale de consigne d'ensemble a_{Lsoll} à partir des valeurs intermédiaire d'accélération (a_{Folge}, a_{Temp}, a_{Pedal}) et
- un régulateur d'accélération (1-13) qui commande les actionneurs de véhicule (1-14a - c) en tenant compte de l'accélération longitudinale de consigne d'ensemble (a_{Lsoll}).
